# EUROPÄISCHE PATENTSCHRIFT

(11) **EP 3 985 275 B1**
(45) Veröffentlichungstag und Bekanntmachung des Hinweises auf die Patenterteilung: **26.04.2023**
(21) Anmeldenummer: 21000290.3
(22) Anmeldetag: 14.10.2021
(51) Int. Cl.: F16D 3/223

(54) **GLEICHLAUFGELENK**
CONSTANT VELOCITY JOINT
ARTICULATION HOMOCINÉTIQUE

(30) Priorität: 16.10.2020 DE 102020006371
(43) Veröffentlichungstag der Anmeldung: 20.04.2022
(73) Patentinhaber: Neumayer Tekfor Engineering GmbH, 77756 Hausach (DE)
(72) Erfinder: Schöner, Daniel, D-77784 Oberharmersbach (DE); Lehmann, Martin, D-78132 Hornberg (DE)

(56) Entgegenhaltungen:
- DE-A1- 10 253 627
- US-B1- 6 413 008

## Beschreibung

Die vorliegende Erfindung betrifft ein Gleichlaufgelenk, wie es beispielsweise im Antriebsstrang eines Kraftfahrzeugs verwendet wird. Eine andere Bezeichnung für ein Gleichlaufgelenk ist beispielsweise Kugelgleichlaufdrehgelenk.

In Fahrzeugen werden Gleichlaufgelenke z. B. im Antriebsstrang verwendet, um das Drehmoment des Motors auf eine Reifenachse zu übertragen. Dabei dienen Kugeln der Kraft- und Drehmomentübertragung zwischen einer Außen- und einer Innennabe des Gelenks. Ein Käfig mit Fenstern hält die Kugeln in einer Ebene, um ein Abwinkeln des Gelenks zu erlauben. Das Gelenk befindet sich dabei in der Regel zwischen zwei Komponenten, über die Drehmomente und Kräfte übertragen werden. Die Komponenten gehören z. B. zu den Längs- oder Querwellen eines Fahrzeugs. Ausgehend von der Art und Beschaffenheit der Komponenten, zwischen denen das Gelenk einzubringen ist, sind daher besondere Übergangskomponenten zwischen dem Gelenk und den Komponenten (z. B. Wellenabschnitten) erforderlich. Dies ist in der Regel mit erhöhten Kosten verbunden und zwingt ggf. zu spezifischen und daher wenig flexiblen Ausführungen. Die Teile des Gelenks oder die Teile, welche mit dem Gelenk für die Anbindung an die umgebenden Komponenten verbunden werden, seien dabei hier und im Folgenden als Wellenanbindungskomponenten bezeichnet. In der Regel sind dabei für das Gelenk zwei Wellenanbindungskomponenten vorhanden.

Die DE 10 2009 051 170 A1 zeigt beispielsweise ein solches Gleichlaufgelenk. Dabei wird die Anbindung des Gelenks zwischen zwei Wellen ermöglicht, indem die Innennabe eine Steckverzahnung aufweist und ein mit der Außennabe kontaktiertes Mitnehmergehäuse vorhanden ist. Für die Verbindung zwischen Mitnehmergehäuse und Außennabe ist dabei entweder eine Hülse vorgesehen oder das Mitnehmergehäuse selbst wird verformt. Somit ist entweder eine Hülse als zusätzliches Bauteil erforderlich oder das Mitnehmergehäuse muss besonders ausgebildet sein, um die Verformung zu ermöglichen.

In der 102 53 627 A1 werden Gleichlaufgelenke offenbart, bei denen die Außennabe mit einem separaten Zapfen verbunden oder einstückig mit diesem ausgestaltet ist.

Eine Flanschverbindung zwischen den Stirnflächen einer Außennabe eines Gelenks und einem Anschlusselement zeigt die DE 43 10 007 C1. Die Stirnflächen haben unterschiedliche Oberflächenhärten und sind miteinander im verzahnten Eingriff.

US 6 413 008 B1 zeigt ein gattungsgemäßes Gleichlaufgelenk.

Eine Verbindung zwischen einer Gelenkwelle und der Innennabe eines Gleichlaufgelenks offenbart die DE 10 2013 004 324 A1. Dabei wird der Übergangsbereich von einer Hülse umfasst.

Die der Erfindung zugrundeliegende Aufgabe besteht darin, ein Gleichlaufgelenk vorzuschlagen, das sich durch eine möglichst leicht adaptierbare und vorzugsweise kostengünstige Art der Anbindung an die umgebenden Komponenten auszeichnet.

Die Erfindung löst die Aufgabe durch ein Gleichlaufgelenk mit einer Innennabe, einer ringförmigen Außennabe, mehreren Kugeln und einer Wellenanbindungskomponente, wobei die Innennabe Laufbahnen aufweist, wobei die Außennabe Laufbahnen aufweist, wobei die Laufbahnen der Innennabe und die Laufbahnen der Außennabe einander paarweise zugeordnet sind und jeweils eine Kugel aufnehmen, wobei die Außennabe mit der Wellenanbindungskomponente kontaktiert ist, wobei die Außennabe eine Kontaktierungsstruktur aufweist, wobei die Wellenanbindungskomponente an einem der Außennabe zugewandten Endbereich eine Befestigungsstruktur aufweist, wobei die Befestigungsstruktur und die Kontaktierungsstruktur mittelbar oder unmittelbar kraft- und/oder momentschlüssig miteinander verbunden sind, wobei die Außennabe Vertiefungen als Kontaktierungsstruktur aufweist, wobei die Wellenanbindungskomponente Erhöhungen als Befestigungsstruktur aufweist, wobei die Erhöhungen in die Vertiefungen eingreifen, und wobei die Laufbahnen der Außennabe und die Vertiefungen der Außennabe miteinander axial fluchtend angeordnet sind.

Aus dem Stand der Technik ist es bekannt, dass die Außennabe und die Wellenanbindungskomponente gemeinsam eine Einheit bilden können. In der Erfindung wird dies in Bezug auf die Frage erweitert, wie diese zwei Funktionseinheiten (also Außennabe und Wellenanbindungskomponente) möglichst effektiv miteinander verbunden werden bzw. wie sie für diesen Zweck auszugestalten sind. Bei der Erfindung trägt die Außennabe - vorzugsweise auf ihrer Innenseite - Laufbahnen für die Kugeln und zusätzlich eine Kontaktierungsstruktur für die Verbindung mit der Wellenanbindungskomponente. Die Wellenanbindungskomponente verfügt an einem Endbereich, der der Außennabe zugewandt ist, über eine Befestigungsstruktur, die gemeinsam mit der Kontaktierungsstruktur eine kraftschlüssige (also für die Übertragung von Kräften) und/oder momentschlüssige (also für die Übertragung von Momenten bzw. insbesondere Drehmomenten) Verbindung erzeugt. Die Verbindung erfolgt dabei je nach Ausgestaltung unmittelbar zwischen Außennabe und Wellenanbindungskomponente oder mittelbar über eine weitere Komponente, die entsprechend in Verbindung mit der Kontaktierungsstruktur bzw. der Befestigungsstruktur gebracht ist. Bei der Erfindung ergibt sich somit ein Gelenk mit einer stabilen Verbindung, die die zuverlässige Übertragung der Kräfte und Drehmomente zwischen der Wellenanbindungskomponente und der Außennabe und damit z. B. zwischen einem Wellenabschnitt und dem Gleichlaufgelenk selbst erlaubt. Weiterhin kann durch die Erfindung über die Ausgestaltung der Wellenanbindungskomponente die Anpassung an die auf das Gleichlaufgelenk folgende Art eines z. B. Wellenabschnitts bzw. der Art der Verbindung mit den umgebenden Komponenten vorgenommen werden. Die Komponente des Gleichlaufgelenks sind in einer Ausgestaltung insbesondere rotationssymmetrisch um die Längsachse des Gleichlaufgelenks ausgeführt.

Die Außennabe weist Vertiefungen als Kontaktierungsstruktur auf. Die Laufbahnen der Außennabe und die Vertiefungen der Außennabe sind miteinander axial fluchtend angeordnet. Die Vertiefungen liegen axial entlang einer Längsachse des Gleichlaufgelenks bzw. der Außennabe hinter oder vor den Laufbahnen der Außennabe. Die fluchtende Ausrichtung bezieht sich dabei beispielsweise auf eine jeweilige Längsachse der Laufbahnen bzw. der Vertiefungen. Alternativ ist die fluchtende Ausrichtung dadurch gegeben, dass bei einer Massivumformung die Laufbahnen und die Vertiefungen im Wesentlichen im gleichen Materialabschnitt des Rohlings erzeugt werden.

Die Wellenanbindungskomponente weist (z. B. stirnseitige) Erhöhungen als Befestigungsstruktur auf. Dabei greifen die Erhöhungen formschlüssig in die Vertiefungen der Außennabe ein. Die radiale Außenkontur der Erhöhungen ist somit zumindest ähnlich der radialen Innenstruktur der Vertiefungen. Die Vertiefungen befinden sich dabei vorzugsweise auf der Innenseite einer ringförmigen Außennabe. Die Vertiefungen sind in einer Ausgestaltung halbringförmige offene Strukturen, die sich an den - im Wesentlichen kreiszylindrischen - Innenraum der Außennaben anschließen. Mit anderen Worten: Die Außennabe umschließt ringförmig einen freien - und vorzugsweise kreiszylindrischen - Innenraum. An der Innenwand befinden sich halbringförmige Vertiefungen (die Vertiefungen erstrecken sich somit gerade auch in radialer Richtung) oder Aussparungen, die sich radial nach außen erstrecken. Somit werden beispielweise die Erhöhungen auf der Stirnseite der Wellenanbindung für einen Formschluss in die Vertiefungen eingebracht. Äquivalent ist es, wenn die Vertiefungen und Erhöhungen bei Außennabe und Wellenanbindungskomponente gerade umgekehrt angeordnet sind.

In einer Ausgestaltung weist also die Wellenanbindungskomponente stirnseitige Erhöhungen als Befestigungsstruktur auf.

Eine Ausgestaltung besteht darin, dass die Wellenanbindungskomponente und die Außennabe jeweils Massivumformbauteile sind.

Die folgenden Ausgestaltungen beziehen sich teilweise auf die Art der Befestigungsstruktur und auf die Art der Verbindung.

Gemäß einer Ausgestaltung sind die Vertiefungen der Außennabe stirnseitig angeordnet. Die Vertiefungen bilden somit einen Teil der Stirnseite der Außennabe, die entsprechend in Kontakt kommt mit der Stirnseite der Wellenanbindungskomponente. Mit anderen Worten: Die Vertiefungen bilden einen Teil eines axialen Endes der Außennabe.

Alternativ befinden sich die Vertiefungen auf einer Außenseite der Außennabe.

Gemäß einer Ausgestaltung sind die Vertiefungen als Aussparungen ausgestaltet. In dieser Ausgestaltung sind somit z. B. auf der Stirnseite der Außennabe Lücken oder Freiräume als Aussparungen vorhanden, in die entsprechende Erhöhungen der Wellenanbindungskomponente eingreifen. Oder mit anderen Worten: In einer Ausgestaltung besteht die Stirnseite der Außennabe aus einem Wechsel von Erhöhungen (oder Zinnen) und Aussparungen (oder Lücken). Die Lücken schließen sich dabei axial den Laufbahnen an.

Gemäß einer Ausgestaltung weist die Wellenanbindungskomponente eine Rändelung als Befestigungsstruktur auf. Alternativ oder ergänzend verfügt die Außennabe über eine Rändelung als Kontaktierungsstruktur. Die Befestigungsstruktur und die Kontaktierungsstruktur (von denen mindestens eine eine Rändelung umfasst) sind miteinander verpresst, um die Verbindung zwischen Wellenanbindungskomponente und Außennabe zu bewirken. Die Außennabe und/oder die Mitnehmerkomponente haben/hat in einer Ausgestaltung einen im Wesentlichen zylindrischen Innen- bzw. Außendurchmesser. Auf diesen bzw. auf diesem befindet sich in dieser Ausgestaltung eine Rändelung.

Gemäß einer alternativen oder ergänzenden Ausgestaltung ist vorgesehen, dass die Erhöhungen der Wellenanbindungskomponente infolge einer Umformung in die Vertiefungen der Außennabe eingreifen und eine axiale Sicherung bewirken. In dieser Ausgestaltung wird somit in Ergänzung beispielweise zu der vorgenannten Ausgestaltung eine Umformung der Erhöhungen vorgenommen, sodass hierdurch Material der Wellenanbindungskomponente in die Aussparungen bzw. die Vertiefungen der Außennabe eingebracht und damit ein unmittelbarer Formschluss erzeugt wird. Die Umformung drückt somit Abschnitte der Wellenanbindungskomponente (also die Erhöhungen) in die Aussparungen hinein.

In einer Ausgestaltung wird das Eindrücken vor allem bei einer Variante erzeugt, in welchen sich die Vertiefungen auf einer Außenseite der Außennabe befinden.

Die Außennabe verfügt dabei in einer Ausgestaltung über Vertiefungen, die als Rücksprünge auf der Außenseite ausgeführt sind. Es handelt sich also um Bereiche der Außenseite, die über einen reduzierten Außendurchmesser in Relation zu den benachbarten Abschnitten verfügen.

In einer Ausgestaltung sind die Erhöhungen der Wellenanbindungskomponte stirnseitig und sind die stirnseitigen Erhöhungen durch einen radial umlaufenden Bund miteinander verbunden. Dieser Bund dient der Stabilisierung der Erhöhungen. In einer Ausgestaltung sind der Bund und die Erhöhungen derartig ausgeführt, sodass die Erhöhungen eine Art von radialer Erstreckung des Bundes darstellen.

Eine Ausgestaltung ist derartig, dass der radial umlaufende Bund auf einer radialen Innenseite der stirnseitigen Erhöhungen angeordnet ist. Der Bund ist in dieser Ausgestaltung eine Art von innerem Ring, von dem die Erhöhungen in radialer Richtung nach außen hin ausgehen.

Eine alternative Variante sieht vor, dass der radial umlaufende Bund auf einer radialen Außenseite der stirnseitigen Erhöhungen angeordnet ist. In dieser Ausgestaltung werden die Erhöhungen von einem radial außen liegenden Bund umfasst. Greift somit die korrespondierende Struktur der Außennabe in die Struktur der Stirnseite der Wellenanbindungskomponente ein, so bildet dieser Bund den äußeren Umfang der Kombination von Wellenanbindungskomponente und Außennabe.

Die Vertiefungen befinden sich vorzugsweise - wie die Laufbahnen - auf einer Innenseite der Außennabe. Dies vereinfacht z. B. das umformtechnische Herstellungsverfahren. So sind in einer Ausgestaltung die Vertiefungen eine axiale Verlängerung der Laufbahnen.

Eine Ausgestaltung beinhaltet, dass die Erhöhungen als Stümpfe auf einer der Außennabe zugewandten Stirnseite der Wellenanbindungskomponente ausgestaltet sind. In dieser Ausgestaltung ragen Stümpfe über die Stirnseite der Wellenanbindungskomponente heraus und erlauben damit den Eingriff in die Vertiefungen der Außennabe. In einer Ausgestaltung ragen die Stümpfe entlang einer Längsachse der Wellenanbindungskomponente über die Stirnseite hinaus.

Gemäß einer weiteren Lehre der Erfindung geschieht die Verbindung zwischen Wellenanbindungskomponente und Außennabe mittelbar über eine dritte Komponente.

So sieht es eine Ausgestaltung vor, dass die Außennabe Vertiefungen als Kontaktierungsstruktur aufweist, dass das Gleichlaufgelenk weiterhin über eine Hülsenkomponente mit Mitnehmerkomponenten verfügt, dass die Wellenanbindungskomponente mindestens eine Befestigungsvertiefung als Befestigungsstruktur aufweist, und dass die Hülsenkomponente mit den Mitnehmerkomponenten in die mindestens eine Befestigungsvertiefung und in die Vertiefungen eingreift und damit die Hülsenkomponente und die Außennabe kraft- und/oder momentschlüssig miteinander verbindet. In dieser Ausgestaltung wird die Verbindung zur Übertragung von Kräften und/oder Momenten zwischen Hülsenkomponente und Außenkraft durch eine Hülsenkomponente realisiert. Dafür verfügt die Wellenanbindungskomponente über mindestens eine Vertiefung, die hier und im Folgenden als Befestigungsvertiefung bezeichnet wird. In dieser Befestigungsvertiefung und in die Vertiefungen der Außennabe greifen Mitnehmerkomponenten (oder kurz: Mitnehmer) der Hülsenkomponente ein.

Die Mitnehmerkomponenten der Hülsenkomponente (oder alternativ: Hülse) sind in einer Ausgestaltung integrale Bereiche der Hülsenkomponente.

In der vorgenannten Variante des Gleichlaufgelenks werden somit Abschnitte der Hülsenkomponente in Verbindung mit Vertiefungen der Außennabe bzw. der Wellenanbindungskomponente gebracht, um die Verbindung für Kräfte und Momente zu erzeugen.

Gemäß einer Ausgestaltung ist vorgesehen, dass die Mitnehmerkomponenten unterschiedliche radiale Erstreckungen aufweisen, und dass die Mitnehmerkomponenten, die in die Vertiefungen der Außennabe eingreifen, radial weiter nach innen ragen als die Mitnehmerkomponenten, die in die Befestigungsvertiefungen der Wellenanbindungskomponente eingreifen. In dieser Ausgestaltung ragen die Mitnehmerkomponenten zu unterschiedlichen Graden radial in die Vertiefungen der Außennabe hinein. So liegen insbesondere die Mitnehmerkomponenten (oder kurz: Mitnehmer) weiter in Richtung Innenraum des Gelenks. Dies hat den Vorteil, dass beim Fügen des Gelenks die Mitnehmer, die in Kontakt mit dem Außenring stehen, nicht in Kontakt mit den axial davor liegenden Mitnehmern für die Wellenanbindungskomponente kommen.

Eine Ausgestaltung besteht darin, dass das Gleichlaufgelenk weiterhin über eine Hülsenkomponente mit Mitnehmerkomponenten verfügt, dass die Wellenanbindungskomponente eine Rändelung als Befestigungsstruktur und/oder die Außennabe eine Rändelung als Kontaktierungsstruktur aufweist, und dass die Hülsenkomponente mit den Mitnehmerkomponenten in die Befestigungsstruktur und in die Kontaktierungsstruktur eingreift und damit die Hülsenkomponente und die Außennabe kraftschlüssig und/oder formschlüssig miteinander verbindet. In dieser Ausgestaltung ist die Wellenanbindungskomponente und/oder die Außennabe mit einer Rändelung versehen. In diese Rändelung wird die Hülsenkomponente oder genauer: werden Mitnehmerkomponenten der Hülsenkomponente beispielweise eingepresst. Weitere Mitnehmerkomponente werden je nach Ausgestaltung in die Außennabe oder Wellenanbindungskomponente eingebracht und bewirken daher insgesamt die kraft- und/oder momentschlüssige Verbindung zwischen der Wellenanbindungskomponente und der Außennabe. In einer Ausgestaltung wird die Hülsenkomponente entsprechend in zwei Rändelungen eingepresst.

Gemäß einer Ausgestaltung sind die Hülsenkomponente und der Außenring derartig ausgestaltet und aufeinander abgestimmt, dass sich zwischen der Hülsenkomponente und dem Außenring ein Freiraum ergibt. Eine solcher Freiraum erlaubt beispielsweise in einer Ausgestaltung die Einbringung einer Dichtung zum Abdichten des Gleichlaufgelenks.

Gemäß einer Ausgestaltung ist die Hülsenkomponente als Blechgehäuse ausgeführt. Ein Blechgehäuse hat z. B. den Vorteil, dass es ein relativ geringes Gewicht hat und dass geringe Kräfte ausreichen, um die Verbindung mit den anderen beteiligten Komponenten zu erzeugen.

Die Stirnseite der Wellenanbindungskomponente hat je nach Ausgestaltung eine geschlossen oder eine mit mindestens einer Aussparung versehene Oberfläche, die der Außennabe zugewandt ist.

Eine Ausgestaltung sieht vor, dass eine der Außennabe zugewandte Stirnseite der Wellenanbindungskomponente als Anschlagsfläche der Außennabe dient. In dieser Ausgestaltung hat die Stirnseite der Wellenanbindungskomponente zumindest die Größe und Geometrie, um der Außennabe im verbauten Zustand als Anschlagsfläche zu dienen. Dies geschieht vorzugsweise derartig, dass sich keine wesentlichen Abstände zwischen den einander berührenden Flächen ergeben. So sind in einer Ausgestaltung die Flächen der Außennabe und der Wellenanbindungskomponente jeweils plan ausgeführt oder verfügen generell über einander korrespondierende Verläufe.

Eine Ausgestaltung beinhaltet, dass die Wellenanbindungskomponente und die Außennabe so ausgestaltet und aufeinander abgestimmt sind, dass die Wellenanbindungskomponente und die Außennabe gemeinsam eine becherartige Begrenzung des Gleichlaufgelenks bilden. Die Wellenanbindungskomponente bildet in dieser Ausgestaltung den Boden und die Außennabe die Seitenberandung einer becherartigen Form, die die zugeordnete Seite des Gleichlaufgelenks begrenzt. Diese Ausgestaltung erlaubt beispielsweise ein gekapseltes Gelenk, das in der Anwendung z. B. mit einem entsprechenden Schmiermittel gefüllt wird.

Eine Ausgestaltung sieht vor, dass die Außennabe und die Wellenanbindungskomponente über einen Pressverband miteinander kontaktiert sind. Der Pressverband erlaubt eine feste Verbindung, sodass z. B. auch Wechsel der Drehrichtung nicht zu Verlusten oder zu Geräuschen führen.

Das erfindungsgemäße Gleichlaufgelenk erlaubt es, eine Vielzahl von unterschiedlichen Wellenanbindungskomponenten mit einer Art von Außennabe zu verbinden. Die Ausgestaltung der Wellenanbindungskomponenten richtet sich dabei nach der Art der Komponenten, mit denen das Gelenk verbunden werden soll, sowie nach der Art, wie die Kontaktierung erfolgen soll. Erforderlich ist jeweils, dass die unterschiedlichen Wellenanbindungskomponente alle über die Erhöhungen verfügen, die der Verbindung mit der Außennabe dienen.

Eine Ausgestaltung beinhaltet, dass die Wellenanbindungskomponente über einen sich axial fort von der Außennabe erstreckenden Zapfen verfügt.

Eine alternative Ausgestaltung sieht vor, dass die Wellenanbindungskomponente über eine Flanschstruktur mit mindestens einer Befestigungsaussparung verfügt.

Im Einzelnen gibt es eine Vielzahl von Möglichkeiten, das erfindungsgemäße Gleichlaufgelenk auszugestalten und weiterzubilden. Dazu wird verwiesen einerseits auf die dem unabhängigen Patentanspruch nachgeordneten Patentansprüche, andererseits auf die folgende Beschreibung eines Ausführungsbeispiels in Verbindung mit den Zeichnungen. Es zeigen:
- Fig. 1:: einen Schnitt durch ein Gleichlaufgelenk,
- Fig. 2:: eine räumliche Darstellung einer ersten Ausgestaltung einer Wellenanbindungskomponente und einer Außennabe als Teile eines Gleichlaufgelenks,
- Fig. 3:: einen Schnitt durch einen Teil der Komponenten der Fig. 2,
- Fig. 4:: eine räumliche Darstellung einer zweiten Ausgestaltung einer Wellenanbindungskomponente und einer Außennabe als Teile eines Gleichlaufgelenks,
- Fig. 5:: einen Schnitt durch einen Teil der Komponenten der Fig. 4,
- Fig. 6:: eine räumliche Darstellung einer dritten Ausgestaltung einer Wellenanbindungskomponente und einer Außennabe als Teile eines Gleichlaufgelenks,
- Fig. 7:: einen Schnitt durch einen Teil der Komponenten der Fig. 6,
- Fig. 8:: eine räumliche Darstellung einer Ausgestaltung einer Wellenanbindungskomponente,
- Fig. 9:: einen Schnitt durch eine vierte Ausgestaltung einer Wellenanbindungskomponente und einer Außennabe,
- Fig. 10:: einen Schnitt durch eine fünfte Ausgestaltung einer Wellenanbindungskomponente und einer Außennabe,
- Fig. 11:: einen Schnitt durch eine sechste Ausgestaltung einer Wellenanbindungskomponente und einer Außennabe,
- Fig. 12:: einen Schnitt durch eine siebte Ausgestaltung einer Wellenanbindungskomponente und einer Außennabe,
- Fig. 13:: einen Schnitt durch eine achte Ausgestaltung einer Wellenanbindungskomponente und einer Außennabe,
- Fig. 14:: eine räumliche Darstellung einer neunten Ausgestaltung der Außennabe,
- Fig. 15:: eine räumliche Darstellung einer zehnten Ausgestaltung der Außennabe und
- Fig. 16:: eine räumliche Darstellung einer Wellenanbindungskomponente passend zur Außennabe der Fig. 15.

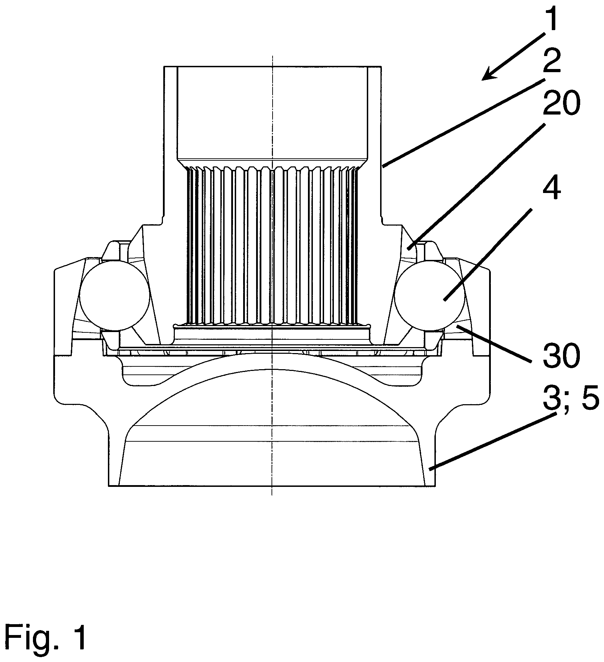

Die Fig. 1 zeigt ein Gleichlaufgelenk 1 gemäß dem Stand der Technik mit Innennabe 2 und Außennabe 3. Beide Naben 2, 3 verfügen jeweils über Laufbahnen 20, 30, in denen sich die Kugeln 4 zur eigentlichen Übertragung von Kräften und Momenten befinden. Die Kugeln 4 werden dabei, um ein Verklemmen zu vermeiden, in den Fenstern eines Käfigs gehalten.

Hier ist zu erkennen, dass die Außennabe 3 einteilig in eine Wellenanbindungskomponente 5 übergeht.

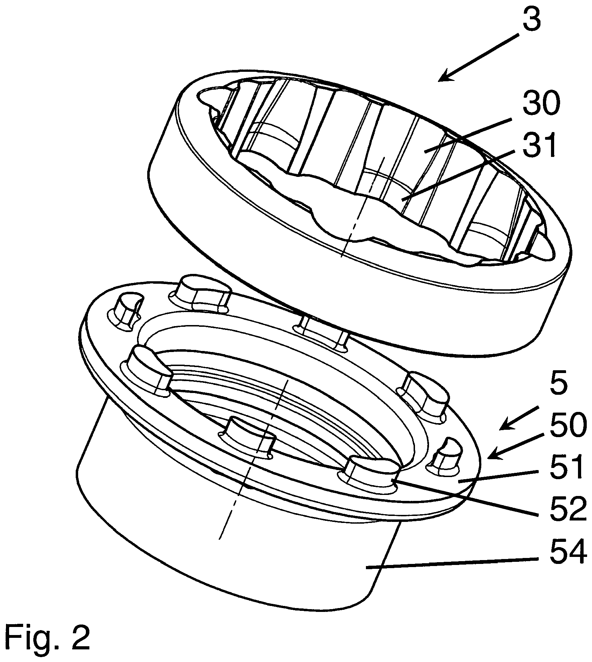

Die Fig. 2 erlaubt einen Blick auf eine Explosionsdarstellung von einer Ausgestaltung von Wellenanbindungskomponente 5 und Außennabe 3 eines Gleichlaufgelenks. Die Außennabe 3 verfügt über die Laufbahnen 30 für die Kugeln und die sich hier axial daran anschließenden und in Richtung der Wellenanbindungskomponente 5 geöffneten Vertiefungen 31. Die Vertiefungen 31 als Kontaktierungsstruktur haben dabei die gleiche Mittelachse, jedoch eine deutlich andere Form als die Laufbahnen 30. Die Vertiefungen 31 und die Laufbahnen 30 sind also axial fluchtend hintereinander angeordnet.

Die Wellenanbindungskomponente 5 verfügt an dem von der Außennabe 3 abgewandten Ende über einen Zapfen 54, der im verbauten Zustand die entsprechende Verbindung zu einer Welle erlaubt. Der der Außennabe 3 zugewandte Endbereich 50 mündet auf eine Stirnseite 51 mit einer mittigen, durchgehenden Aussparung. Am Rand der Aussparung sind die stirnseitigen und sich damit axial nach außen erstreckenden Erhöhungen 52 vorhanden.

Die Geometrien von Erhöhungen 52 und Vertiefungen 31 sind dabei so aufeinander abgestimmt, dass sich ein Formschluss ergibt.

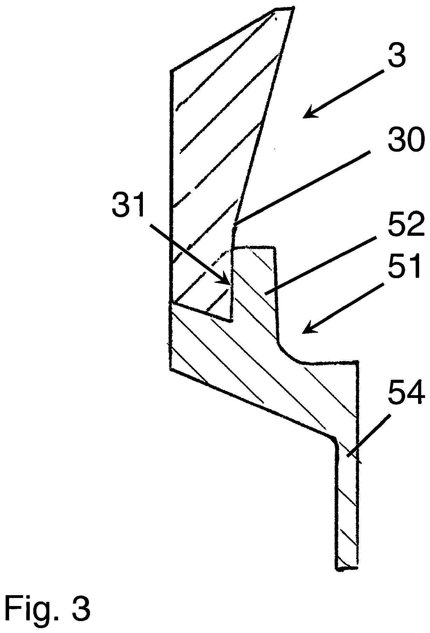

Die Fig. 3 zeigt einen Schnitt durch die Anordnung der Fig. 2. Es ist zu erkennen, dass die Erhöhung 52 auf der Stirnseite radial innerhalb der Außennabe 3 befindlich ist und in die Vertiefung 31 hineinragt. Die Kontaktierungsstruktur 31 als Bereich mit einem größeren Innendurchmesser und daher weiter radial nach außen ragend wiederum ist eine Verlängerung der Laufbahn 30. Weiterhin ist zu erkennen, dass der Zapfen 54 hohl ist.

Bei den folgenden Figuren werden für die Übersichtlichkeit im Wesentlichen nur die Unterschiede beschrieben.

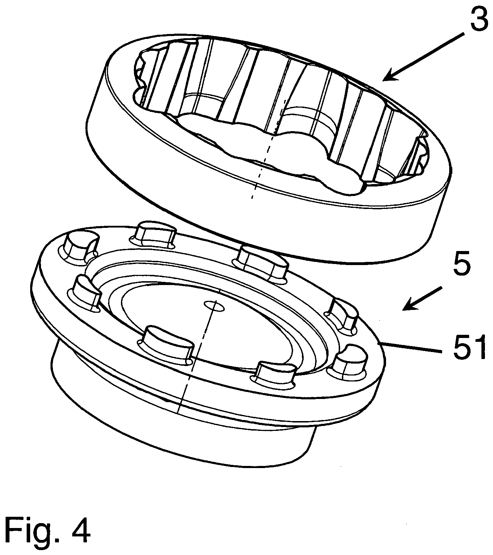

Die Ausgestaltung der Fig. 4 unterscheidet sich von der Ausgestaltung der Fig. 2 darin, dass die Stirnseite 51 der Wellenanbindungskomponente 5 eine geschlossene Fläche aufweist. Dies führt dazu, dass die Wellenanbindungskomponente 5 und die Stirnseite 51 eine Art von Becher für das Gelenk bilden, sodass beispielsweise ein Schmierstoff eingefüllt werden kann.

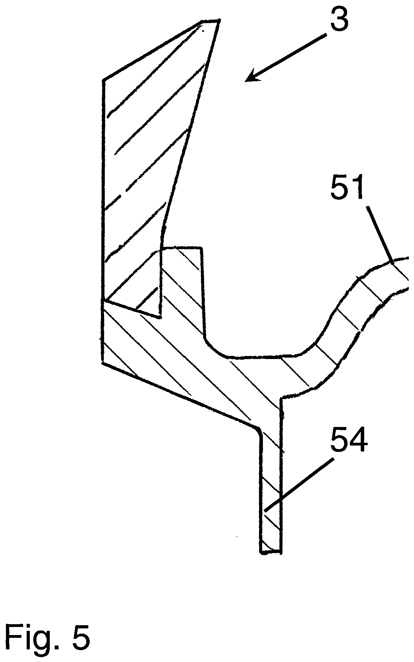

Im Schnitt der Fig. 5 ist zu erkennen, dass die geschlossene Fläche der Stirnseite 51 in Richtung des Gelenks bzw. der Außennabe 3 gewölbt ist. Der sich daran anschließende Zapfen 54 ist auch hier hohl ausgestaltet.

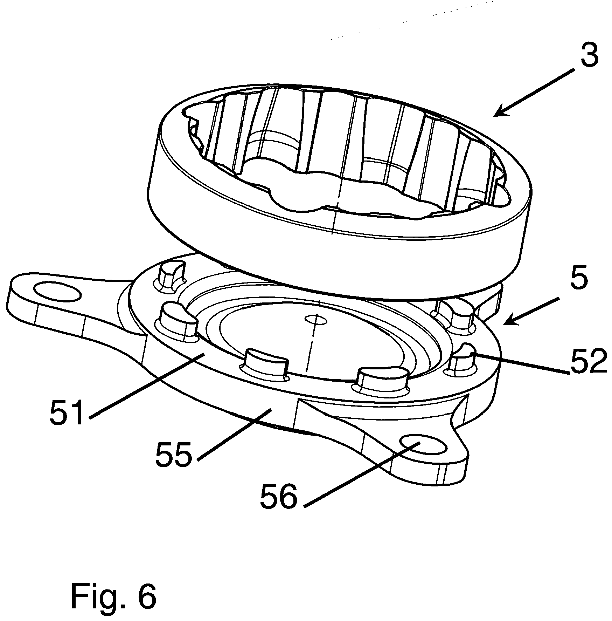

Die Ausgestaltung der Fig. 6 unterscheidet sich von den vorhergehenden Ausführungen hinsichtlich der Form der Wellenanbindungskomponente 5. An die Stirnseite 51 mit den Erhöhungen 52 grenzt hier eine Flanschstruktur 55 mit drei Befestigungsaussparungen 56 an. Die Stirnseite 51 selbst ist hier wieder mit einer geschlossenen Fläche versehen.

Dabei erlaubt es die Erfindung, unterschiedlichste Varianten an Wellenanbindungskomponente 5 mit der gleichen Art von Außennabe 3 zu verbinden.

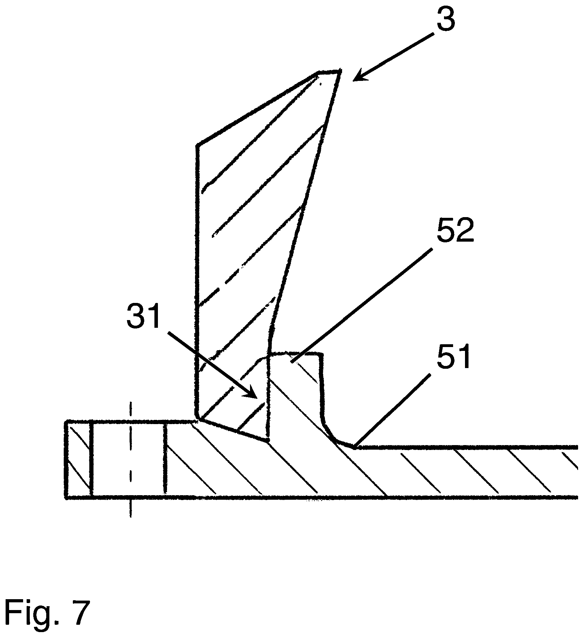

Wie der Schnitt der Fig. 7 zeigt, ist es erforderlich, dass die Geometrien in Bezug auf die Verbindung jeweils passend sind. So befindet sich auch hier die Erhöhung 52 auf der Stirnseite 51 radial innerhalb der Vertiefung 31 der Kontaktierungsstruktur der Außennabe 3.

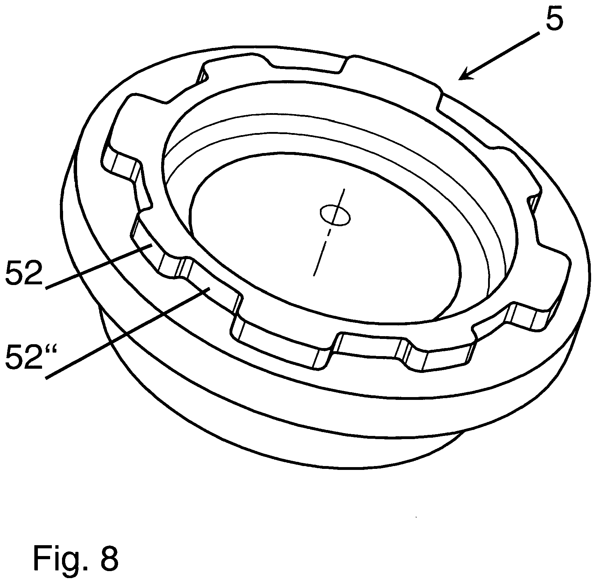

Die Wellenanbindungskomponente 5 der Fig. 8 unterscheidet sich von den vorherigen Varianten dadurch, dass die Erhöhungen 52 auf ihrer radialen Innenseite eine Verstärkung oder Stabilisierung durch einen radial umlaufenden Bund 52" erhalten. Der Bund 52" ist dabei auch eine geschlossene Struktur. Die Erhöhungen 52 und der Bund 52" sind hier zusammenhängend ausgeführt. In einer alternativen - nicht dargestellten - Ausführungen besteht zwischen den Erhöhungen 52 und dem Bund 52" ein Abstand.

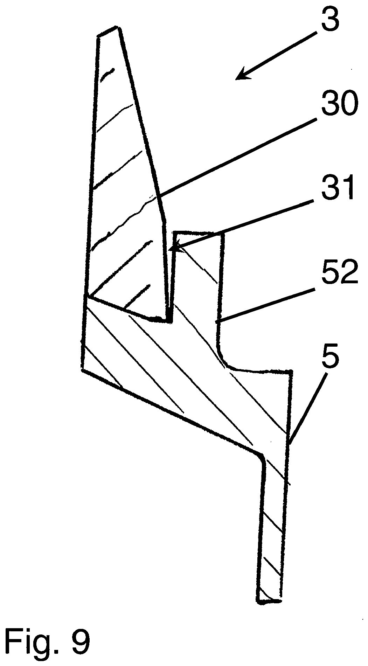

Der Schnitt der Fig. 9 zeigt eine Ausgestaltung, in welcher die Außennabe 3 in Verlängerung der Laufbahn 30 über eine Vertiefung oder einen Rücksprung 31 als Kontaktierungsstruktur verfügt. Die Laufbahn 30 bzw. die Kontaktierungsstruktur 31 schließt sich dabei in Richtung der Wellenanbindungskomponente 5, d.h. es findet eine Reduzierung des Innendurchmessers in axialer Richtung statt. Radial innerhalb der Außennabe 3 befindet sich die Erhöhung 52 der Wellenanbindungskomponente 5. Nach dem Zusammenbringen der beiden Komponenten wird eine - vorzugsweise axial wirkende - Kraft auf die Erhöhung 52 ausgeübt, sodass sich diese in die Kontaktierungsstruktur 31 hinbewegt. Es wird also umformtechnisch die Verbindung zwischen Wellenanbindungskomponente 5 und Außennabe 3 erzeugt.

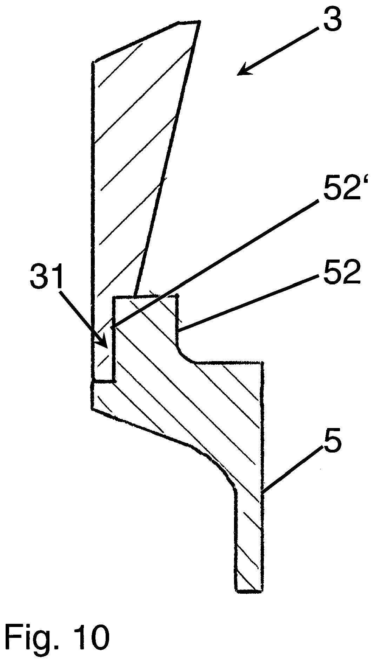

Eine ähnliche unmittelbar und teilweise stoffschlüssige Verbindung wird in der Ausführung der Fig. 10 realisiert. Dort verfügt die Wellenanbindungskomponente 5 auf der radialen Außenseite der Erhöhungen 52 über eine Rändelung 52'. In diese wird bei der Montage das Material der Kontaktierungsstruktur 31 der Außennabe 3 eingebracht. Es entsteht somit ein Rändelpressverband, der eine Drehmomentmitnahme bewirkt. In einer alternativen - hier nicht dargestellten - Ausführung trägt die Außennabe 3 eine Rändelung, in welche das Material der Wellenanbindungskomponente eingebracht wird.

In den folgenden drei Ausgestaltungen werden nicht mehr nur zwei Komponenten miteinander verbunden, sondern eine dritte Komponente erzeugt eine mittelbare Kontaktierung zwischen den beiden anderen Bauteilen.

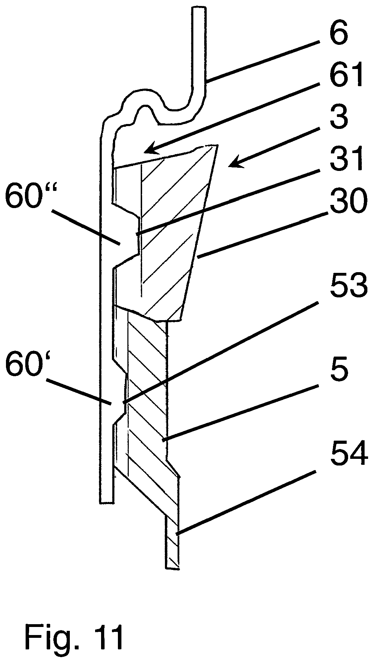

Die Fig. 11 zeigt eine Außennabe 3 mit den Laufbahnen 30 auf der radialen Innenseite und Vertiefungen 31 als Kontaktierungsstruktur auf der Außenseite. Die Wellenanbindungskomponente 5 verfügt auch hier über einen Zapfen 54 und über eine Befestigungsstruktur, die hier als Befestigungsvertiefung 53 ausgeführt ist. Somit haben sowohl die Außennabe 3 als auch die Wellenanbindungskomponente 5 Vertiefungen 31, 53 auf der Außenseite. Dort befindet sich die Hülsenkomponente 6, die hier als Blechteil ausgeführt ist. Die Hülsenkomponente 6 verfügt auf ihrer Innenseite über radial nach innen ragende Mitnehmerkomponenten 60', 60", die in die Vertiefungen 31, 53 eingreifen und somit die formschlüssige Verbindung zur Drehmomentübertragung zwischen Außennabe 3 und Wellenanbindungskomponente 5 bewirken. Zwischen dem oberen Ende der Hülsenkomponente 6 und dem Endbereich der Außennabe 3 wird ein Freiraum 61 gebildet, der im montierten Zustand beispielsweise eine Dichtung aufnimmt.

Zu erkennen ist auch, dass die Mitnehmerkomponente 60', die in die Befestigungsvertiefung 53 eingreift, eine deutlich geringere radiale Erstreckung als diejenige Mitnehmerkomponente 60" aufweist, die in die Vertiefung 31 der Außennabe 3 eingreift. Die letztgenannte Mitnehmerkomponente 60" ragt also radial weiter nach innen als die andere Mitnehmerkomponente 60'. Dies bewirkt, dass beim Fügen das Bauteil nicht in Kontakt mit den davor liegenden Mitnehmerkomponenten kommt.

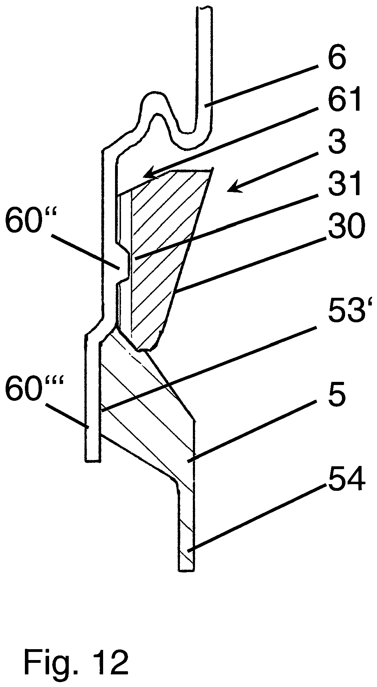

Der Unterschied zwischen den Varianten der Fig. 11 und der der Fig. 12 besteht darin, dass bei der Ausgestaltung der Fig. 12 die Wellenanbindungskomponente 5 auf ihrer Außenseite über eine Rändelung 53' verfügt. In dieser Rändelung 53' wird bei der Montage ein Abschnitt der Hülsenkomponente 6 als Mitnehmerkomponente 60‴ eingepresst. In einer alternativen - hier nicht dargestellten - Variante verfügt die Außennabe 3 über eine Rändelung, in welche das Material der Wellenanbindungskomponente 5 eingepresst ist.

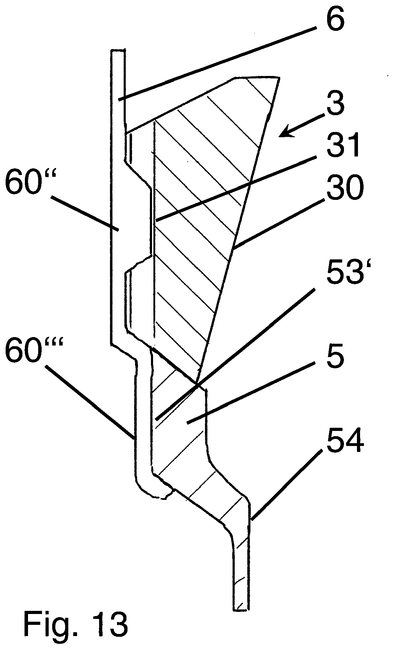

Die Variante der Fig. 13 ist insofern ähnlich der Ausgestaltung der Fig. 12 ähnlich, als dass die Verbindung zwischen Wellenanbindungskomponente 5 und Hülsenkomponente 6 sowie zwischen Außennabe 3 und Hülsenkomponente 6 gleich ausgeführt ist. Es wird also eine Mitnehmerkomponente 60" in die Vertiefung 31 der Kontaktierungsstruktur der Außennabe 3 eingebracht und eine weitere Mitnehmerkomponente 60‴ wird in die Rändelung 53' der Wellenanbindungskomponente 5 eingepresst. Ein Rändelpressverband dient somit der Drehmomentmitnahme.

Der Unterschied besteht darin, dass sich oberhalb der Außennabe 3 kein Freiraum befindet. Zudem umschließt die Hülsenkomponente 6 mit ihrem Ende eine Kante der Wellenanbindungskomponente 5. Dies geschieht beispielsweise durch ein Umbördeln.

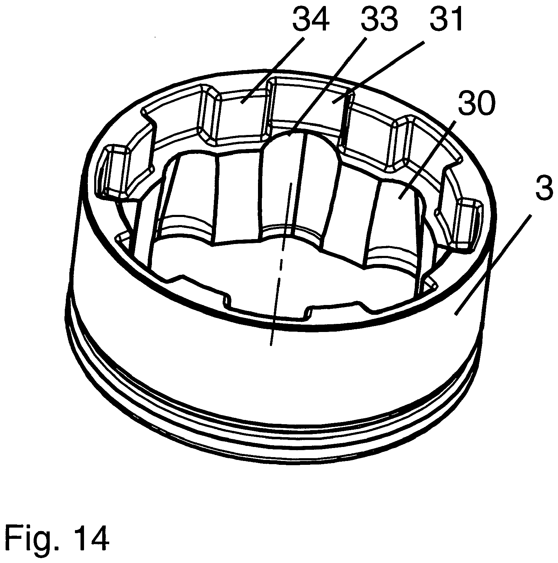

Bei der Außennabe 3 der Fig. 14 sind die Laufbahnen 30 und die Vertiefungen 31 axial miteinander fluchtend ausgestaltet. Die Vertiefungen 31 liegen somit auf einer axialen Verlängerung der Laufbahnen 30. Zu erkennen ist, dass sich ein umlaufender Absatz 33 zwischen den Laufbahnen 30 und den Vertiefungen 31 befindet. Dies ist der Bereich, an dem die Laufbahnen 30 mit ihrer eher gerundeten Form münden, und ab dem die Vertiefungen 31 und die radial nach innen ragenden Zähne 34 mit ihren eher planen Formen beginnen. Radial umlaufend wechseln sich die Zähne 34 und die Vertiefungen 31 miteinander ab. Umgeben wird diese Stirnseite der Außennabe 3 für die Verbindung mit der Wellenanbindungskomponente von einem geschlossenen Rand, der sich radial außen befindet. Greifen also die Erhöhungen der - hier nicht dargestellten - Wellenanbindungskomponente in die Vertiefungen 31 ein, so werden wie von dem geschlossenen Rand nach außen hin umfasst.

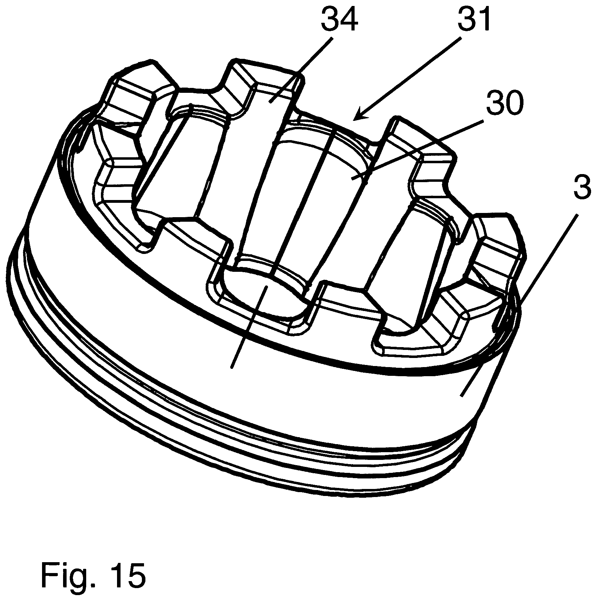

In der Ausgestaltung der Außennabe 3 der Fig. 15 ist im Vergleich zur Ausgestaltung der Fig. 14 der Rand der Außennabe 3 nicht vorhanden, sodass sich die Vertiefungen 31 als offene Aussparungen zwischen den Zähnen 34 ergeben. Die Vertiefungen 31 folgen gleichwohl axial den Laufbahnen 30. Ebenfalls ist hier kein Absatz wie in der Fig. 14 vorhanden. Die Zähne 34 folgen durchgehend den Abschnitten zwischen den Laufbahnen 30. Zu erkennen ist auch, dass die Zähne 34 im Gegensatz zur Variante der Fig. 14 radial weiter innen beginnen, sodass sich ein radial äußerer Rand einstellt.

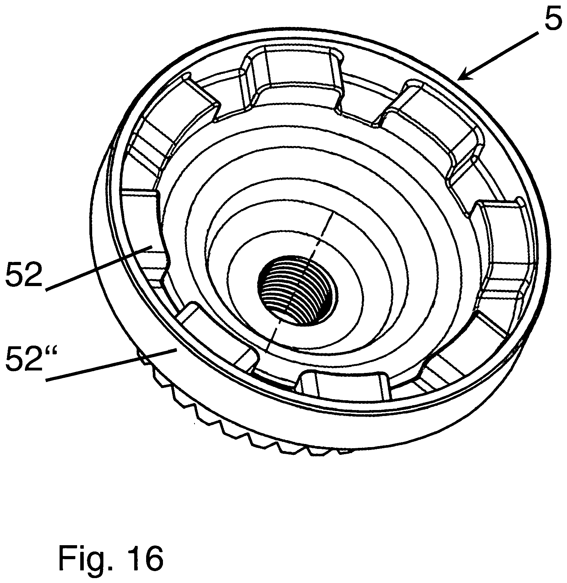

Eine zu der Außennabe 3 prinzipiell passende Wellenanbindungskomponente 5 zeigt die Fig. 16. Darin sind die stirnseitigen Erhöhungen 52 vorhanden, die auf ihrer radialen Außenseite von einem umlaufenden Bund 52" umgeben sind. Dieser Bund 52" umschließt im montierten Zustand die Zähne 34 der Außennabe 3. Die Anordnung des Bunds 52" der Ausgestaltung der Fig. 16 ist somit eine Alternative zur Variante der Fig. 8.

## Patentansprüche

1. Gleichlaufgelenk (1)
mit einer Innennabe (2),
einer ringförmigen Außennabe (3),
mehreren Kugeln (4) und
einer Wellenanbindungskomponente (5),
wobei die Innennabe (2) Laufbahnen (20) aufweist,
wobei die Außennabe (3) Laufbahnen (30) aufweist,
wobei die Laufbahnen (20) der Innennabe (2) und die Laufbahnen (30) der Außennabe (3) einander paarweise zugeordnet sind und jeweils eine Kugel (4) aufnehmen,
wobei die Außennabe (3) mit der Wellenanbindungskomponente (5) kontaktiert ist,
wobei die Außennabe (3) eine Kontaktierungsstruktur (31) aufweist,
wobei die Wellenanbindungskomponente (5) an einem der Außennabe (3) zugewandten Endbereich (50) eine Befestigungsstruktur (52, 52', 53, 53') aufweist,
wobei die Befestigungsstruktur (52, 52', 53, 53') und die Kontaktierungsstruktur (31) mittelbar oder unmittelbar kraft- und/oder momentschlüssig miteinander verbunden sind,
wobei die Außennabe (3) Vertiefungen (31) als Kontaktierungsstruktur aufweist,
wobei die Wellenanbindungskomponente (5) Erhöhungen (52) als Befestigungsstruktur aufweist,
wobei die Erhöhungen (52) in die Vertiefungen (31) eingreifen, **dadurch gekennzeichnet, dass**
die Laufbahnen (30) der Außennabe (3) und die Vertiefungen (31) der Außennabe (3) miteinander axial fluchtend angeordnet sind.

2. Gleichlaufgelenk (1) nach Anspruch 1,
wobei die Vertiefungen (31) der Außennabe (3) stirnseitig angeordnet sind.

3. Gleichlaufgelenk (1) nach Anspruch 1 oder 2,
wobei die Vertiefungen (31) der Außennabe (3) als Aussparungen ausgestaltet sind.

4. Gleichlaufgelenk (1) nach einem der Ansprüche 1 bis 3,
wobei die Erhöhungen (52) der Wellenanbindungskomponente (5) infolge einer Umformung in die Vertiefungen (31) der Außennabe (3) eingreifen und eine axiale Sicherung bewirken.

5. Gleichlaufgelenk (1) nach einem der Ansprüche 1 bis 4,
wobei sich die Vertiefungen (31) als Rücksprünge auf einer Außenseite der Außennabe (3) befinden.

6. Gleichlaufgelenk (1) nach einem der Ansprüche 1 bis 5,
wobei die Erhöhungen (52) stirnseitig sind, und
wobei die stirnseitigen Erhöhungen (52) durch einen radial umlaufenden Bund (52") miteinander verbunden sind.

7. Gleichlaufgelenk (1) nach Anspruch 6,
wobei der radial umlaufende Bund (52") auf einer radialen Innenseite der stirnseitigen Erhöhungen (52) angeordnet ist.

8. Gleichlaufgelenk (1) nach Anspruch 6,
wobei der radial umlaufende Bund (52") auf einer radialen Außenseite der stirnseitigen Erhöhungen (52) angeordnet ist.

9. Gleichlaufgelenk (1) nach einem der Ansprüche 1 bis 8,
wobei die Wellenanbindungskomponente (5) und die Außennabe (3) so ausgestaltet und aufeinander abgestimmt sind, dass die Wellenanbindungskomponente (5) und die Außennabe (3) gemeinsam eine becherartige Begrenzung des Gleichlaufgelenks (1) bilden.

10. Gleichlaufgelenk (1) nach Anspruch 9,
wobei eine Stirnseite (51) der Wellenanbindungskomponente (5) eine geschlossene Fläche aufweist.

11. Gleichlaufgelenk (1) nach einem der Ansprüche 1 bis 10,
wobei die Wellenanbindungskomponente (5) über eine Flanschstruktur (55) mit mindestens einer Befestigungsaussparung (56) verfügt.

12. Gleichlaufgelenk (1) nach einem der Ansprüche 1 bis 11,
wobei die Wellenanbindungskomponente (5) und die Außennabe (3) jeweils Massivumformbauteile sind.

## Claims

1. Constant velocity joint (1)
with an inner hub (2),
a ring-shaped outer hub (3),
multiple balls (4) and
a shaft-coupling component (5),
whereby that inner hub (2) has raceways (20),
whereby that outer hub (3) has raceways (30),
whereby the raceways (20) of the inner hub (2) and the raceways (30) of the outer hub (3) are assigned to each other in pairs and each receives a ball (4)
whereby the outer hub (3) is connected to a shaft-coupling component (5),
whereby the outer hub (3) features a contacting structure (31),
whereby the shaft-coupling component (5) features a mounting structure (52, 52', 53, 53') at an end section (50) that faces the outer hub (3), whereby the mounting structure (52, 52', 53, 53') and the contacting structure (31) are indirectly or directly connected to each other by means of an interaction of force and / or torque,
whereby that outer hub (3) has grooves (31) that serve as the mounting structure,
whereby that shaft-coupling component (5) has ridges (52) that serve as the mounting structure,
whereby the ridges (52) engage with the grooves (31), Z **characterized by** the axial alignment of the raceways (30) of the outer hub (3) and the grooves (31) of the outer hub (3) toward each other.

2. Constant velocity joint (1) according to Claim 1,
whereby the grooves (31) of the outer hub (3) are aligned at its front.

3. Constant velocity joint (1) according to Claim 1 or 2,
whereby the grooves (31) of the outer hub (3) are shaped as slots.

4. Constant velocity joint (1) according to one of Claims 1 to 3,
whereby the ridges (52) of the shaft-coupling component (5), as the result of a deformation, engage with the grooves (31) of the outer hub (3) and therefore ensure that they are secured axially.

5. Constant velocity joint (1) according to one of Claims 1 to 4,
whereby the grooves (31) are located on the outside of the outer hub (3) and form recesses there.

6. Constant velocity joint (1) according to one of Claims 1 to 5,
whereby the ridges (52) are located at the front, and
whereby the frontal ridges (52) are connected to each other via a radially circumferential flange (52").

7. Constant velocity joint (1) according to Claim 6,
whereby the radially circumferential flange (52") is arranged on the radial inner side of the frontal ridges (52).

8. Constant velocity joint (1) according to Claim 6,
whereby the radially circumferential flange (52") is arranged on the radial outer side of the frontal ridges (52).

9. Constant velocity joint (1) according to one of Claims 1 to 8,
whereby the shaft-coupling component (5) and the outer hub (3) are shaped and synchronized so that the shaft-coupling component (5) and the outer hub (3) together form a cup-like limitation of the constant velocity joint (1).

10. Constant velocity joint (1) according to Claim 9,
whereby the front side (51) of the shaft-coupling component (5) features a closed surface.

11. Constant velocity joint (1) according to one of Claims 1 to 10,
whereby the shaft-coupling component (5) features a flange structure (55) with at least one mounting slot (56).

12. Constant velocity joint (1) according to one of Claims 1 to 11,
whereby both the shaft-coupling component (5) and the outer hub (3) are bulk metal formed parts.

## Revendications

1. Joint homocinétique (1)
à moyeu intérieur (2),
moyeu extérieur annulaire (3),
plusieurs billes (4) et
un composant de raccord d'arbre (5),
dans lequel le moyeu intérieur (2) présente des glissières (20),
dans lequel le moyeu extérieur (3) présente des glissières (30),
dans lequel les glissières (20) du moyeu intérieur (2) et les glissières (30) du moyeu extérieur (3) sont attribués l'un à l'autre en paire et accueillent chacune une bille (4), à savoir que le moyeu extérieur (3) est en contact avec le
composant de raccord d'arbre (5), à savoir que le moyeu extérieur (3) présente une structure de contact (31),
dans lequel le composant de raccord d'arbre (5) présente à une extrémité (50) tournée vers le moyeu extérieur (3) une structure de fixation (52, 52', 53, 53'), à savoir que la structure de fixation (52, 52', 53, 53') et la structure de contact (31) sont reliées entre elles de manière directe ou indirecte, par interaction de force et / ou de couple,
dans lequel le moyeu extérieur (3) présente des creux (31) comme structure de contact,
dans lequel le moyeu composant de raccord d'arbre (5) présente des élévations (52) comme structure de contact,
à savoir que les élévations (52) s'engagent dans les creux (31), **caractérisé en ce que** les glissières (30) du moyeu extérieur (3) et les creux (31) du moyeu extérieur (3) sont alignés axialement l'un par rapport à l'autre.

2. Joint homocinétique (1) selon revendication 1,
à savoir que les creux (31) du moyeu extérieur (3) sont disposés sur la face frontale.

3. Joint homocinétique (1) selon la revendication 1 ou 2,
à savoir que les creux (31) du moyeu extérieur (3) ont la forme d'encoches.

4. Joint homocinétique (1) selon l'une des revendications 1 à 3,
à savoir que les élévations (52) du composant de raccord de l'arbre (5) s'engagent, en raison d'une déformation, dans les creux (31) du moyeu extérieur (3) et entraînent une sécurisation axiale.

5. Joint homocinétique (1) selon l'une des revendications 1 à 4,
à savoir que les creux (31) se trouvent, comme emboîtements, sur un côté extérieur du moyeu extérieur (3).

6. Joint homocinétique (1) selon l'une des revendications 1 à 5,
à savoir que les élévations (52) se trouvent du côté avant,
et à savoir que les élévations avant (52) sont reliées entre elles par une attache périphérique radiale (52").

7. Joint homocinétique (1) selon revendication 6,
à savoir que l'attache périphérique radiale (52") se trouve sur un côté intérieur radial des élévations avant (52).

8. Joint homocinétique (1) selon revendication 6,
à savoir que l'attache périphérique radiale (52") se trouve sur un côté extérieur radial des élévations avant (52).

9. Joint homocinétique (1) selon l'une des revendications 1 à 8,
à savoir que le composant de raccord de l'arbre (5) et le moyeu extérieur (3) sont conçus et adaptés l'un par rapport à l'autre de manière à ce que le composant de raccord d'arbre (5) et le moyeu extérieur (3) forment ensemble une limitation du joint homocinétique (1) en forme de gobelet.

10. Joint homocinétique (1) selon revendication 9,
à savoir qu'une face avant (51) du composant de raccord d'arbre (5) présente une surface fermée.

11. Joint homocinétique (1) selon l'une des revendications 1 à 10,
à savoir que le composant de raccord d'arbre (5) dispose d'une structure de bride (55) dotée d'au moins un évidement de fixation (56).

12. Joint homocinétique (1) selon l'une des revendications 1 à 11,
à savoir que le composant de raccord d'arbre (5) et le moyeu extérieur (3) sont chacun des pièces massives de transformation.
